(19) Europäisches Patentamt
European Patent Office
Office européen des brevets

(11) **EP 4 567 455 B1**

(12) **EUROPEAN PATENT SPECIFICATION**

(45) Date of publication and mention
of the grant of the patent:
**22.07.2026 Bulletin 2026/30**

(21) Application number: **23215215.7**

(22) Date of filing: **08.12.2023**

(51) International Patent Classification (IPC):
*G01S 7/35* $^{(2006.01)}$    *G01S 13/34* $^{(2006.01)}$
*G01S 13/58* $^{(2006.01)}$    *G01S 13/87* $^{(2006.01)}$
*G01S 13/931* $^{(2020.01)}$

(52) Cooperative Patent Classification (CPC):
**G01S 13/34; G01S 7/354; G01S 7/358;
G01S 13/584; G01S 13/87; G01S 13/931**

(54) **PHASE NOISE REMOVAL**

PHASENRAUSCHUNTERDRÜCKUNG

SUPPRESSION DE BRUIT DE PHASE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(43) Date of publication of application:
**11.06.2025 Bulletin 2025/24**

(73) Proprietor: **NXP B.V.**
**5656 AG Eindhoven (NL)**

(72) Inventors:
• **CIACCI, Massimo**
**5212 SN Den Bosch (NL)**
• **PETROV, Nikita**
**5708 ZK Helmond (NL)**

(74) Representative: **Colaiuda, Antonella**
**NXP Semiconductors Germany GmbH**
**Intellectual Property Group**
**Beiersdorfstraße 12**
**22529 Hamburg (DE)**

(56) References cited:
**US-B2- 11 709 221**

• **SHANG YANG ET AL: "Design and Analysis of
CMOS-Based Terahertz Integrated Circuits by
Causal Fractional-Order RLGC Transmission
Line Model", IEEE JOURNAL ON EMERGING
AND SELECTED TOPICS IN CIRCUITS AND
SYSTEMS, IEEE, PISCATAWAY, NJ, USA, vol. 3,
no. 3, 1 September 2013 (2013-09-01), pages 355 -
366, XP011526556, ISSN: 2156-3357, [retrieved
on 20130909], DOI: 10.1109/
JETCAS.2013.2268948**

**Description**

Field

The disclosure relates to removal of phase noise from baseband signals in an FMCW radar transceiver.

Background

Linear frequency modulation (LFM) chirp signals are commonly used in different types of sensors, such as radar, sonar, and ultrasound due to simple hardware implementation of the waveform generator and receiver. One advantage of linear chirps is that they enable processing large bandwidth waveforms using narrow band techniques. This can be achieved using a deramping, dechirping or stretch processing receiver, which mixes received signal echoes with the transmitted signal and estimates target ranges from the obtained narrowband beat signal. In this way, high range resolution measurements with a large dynamic range can be obtained with an ADC (analog to digital converter) having a low sampling frequency. Large dynamic range requirements are also achieved with an efficient suppression of the direct Tx-Rx leakage by an (analog) highpass filter prior to data acquisition and by digital processing techniques such as windowing in range FFT (fast Fourier transform).

An important aspect for achieving high dynamic range performance of such systems relies on linearity of the generated chirps. For compact on-chip devices operating at high frequencies, the waveform generator (typically a PLL) may suffer from parasitic imperfections of the generated chirp, termed generically as phase noise. This noise comprises any phase error from that of an ideal linear chirp, including systematic errors and random errors caused by thermal noise, shot noise, flicker noise, and the jitter inherent to any crystal oscillator. Phase noise is an undesirable but unavoidable characteristic that adversely affects the performance of any range-Doppler radar system. Phase noise affects systems with multiple transceivers much more than systems with a single transceiver.

Whereas in a single transceiver system the receiver will largely suppress phase noise (since the same LO signal is used for TX and RX cancelling out part of the phase noise, and whitening it, i.e. decorrelating it), in the case of multiple transceivers different phase noise sources will add up at the receiver mixer. Within one transceiver, typically multiple transmitter antennas transport the same phase noise. At the RX side, each antenna will also receive similar phase noise, which will be decorrelated after the mixer in the same way for all RX paths, from one LO signal.

Uncompensated phase noise varies in time and across subsequent chips. This may result in degradation of the dynamic range in the vicinity of a target, whereby a strong echo can mask weaker targets in adjacent range cells, or in the same range cell and adjacent Doppler cells. For example, with reference to an application in automotive radar, the response of a strong object, for example a truck, can mask the response of a smaller object such as a pedestrian that is present next to it.

US 11 709 221 B2 discloses an FMCW radar system configured for distance and velocity determination based on a real part or an imaginary part of derotated baseband signals.

Yang Shang et al.: "Design and Analysis of CMOS-Based Terahertz Integrated Circuits by Causal Fractional-Order RLGC Transmission Line Model", IEEE JOURNAL ON EMERGING AND SELECTED TOPICS IN CIRCUITS AND SYSTEMS, vol. 3, no. 3, September 2013, pages 355-366 discloses causality verification for T-line models related to linear and time-invariant networks based on an error difference between the Hilbert transform of a real part of an S-parameter and its imaginary part.

Summary

According to a first aspect there is provided a method of removing phase noise from a baseband signal in an FMCW radar transceiver, the method comprising:

    i) receiving the baseband signal;
    ii) derotating the baseband signal to provide a derotated baseband signal;
    iii) separating the derotated baseband signal into a real part and an imaginary part;
    iv) performing a Hilbert transform on the real part to provide a transformed signal;
    v) subtracting the transformed signal from the imaginary part to obtain a phase noise signal estimate; and
    vi) subtracting the phase noise signal estimate from the baseband signal to provide a phase noise corrected signal.

The method may further comprise:

    vii) converting the derotated baseband signal to a frequency domain signal;
    viii) subtracting magnitudes of negative frequencies of the frequency domain signal from positive frequencies of the frequency domain signal to provide an intermodulation signal; and

ix) determining signs of the intermodulation signal,

wherein step iv) comprises performing a Fourier transform of an output of the Hilbert transform, combining an output of the Fourier transform with the signs and performing an inverse Fourier transform on the combined output to provide the transformed signal.

The method may alternatively further comprise:

vii) converting the derotated baseband signal to a frequency domain signal;

viii) subtracting magnitudes of negative frequencies of the frequency domain signal from positive frequencies of the frequency domain signal to provide an intermodulation signal; and

ix) determining signs of the intermodulation signal,

wherein step iv) comprises performing a Fourier transform of the derotated baseband signal, performing the Hilbert transform in the frequency domain, combining an output of the Hilbert transform with the signs and performing an inverse Fourier transform on the combined output to provide the transformed signal.

The Hilbert transform may be performed by multiplying the Fourier transformed baseband signal by $-j$ for frequencies greater than zero.

Step v) may comprise removing a predetermined phase noise spectrum from the phase noise signal estimate.

Steps iii) to v) may be repeated to obtain a more accurate phase noise signal estimate.

Step ii) may comprise identifying a spectral peak in the baseband signal and demodulating the baseband signal about the spectral peak.

Demodulating the baseband signal may comprise frequency shifting and normalizing the baseband signal to move the identified spectral peak to DC and with a phase of the baseband signal at +1 on the IQ plane.

According to a second aspect there is provided a phase noise correction module for an FMCW radar transceiver system, the phase noise correction module configured to:

i) receive an input baseband signal;

ii) derotate the baseband signal to provide a derotated baseband signal;

iii) separate the derotated baseband signal into a real part and an imaginary part;

iv) perform a Hilbert transform on the real part to provide a transformed signal;

v) subtract the transformed signal from the imaginary part to obtain a phase noise signal; and

vi) subtract the phase noise signal from the input baseband signal to provide an output phase noise corrected signal.

The phase noise correction module may be further configured to:

vii) convert the derotated baseband signal to a frequency domain signal;

viii) subtract magnitudes of negative frequencies of the frequency domain signal from positive frequencies of the frequency domain signal to provide an intermodulation signal; and

ix) determine signs of the intermodulation signal,

wherein the phase noise correction module is configured to provide the transformed signal by performing a Fourier transform of an output of the Hilbert transform, combining an output of the Fourier transform with the signs and performing an inverse Fourier transform on the combined output.

The phase noise correction module may be further configured to:

vii) convert the derotated baseband signal to a frequency domain signal;

viii) subtract magnitudes of negative frequencies of the frequency domain signal from positive frequencies of the frequency domain signal to provide an intermodulation signal; and

ix) determine signs of the intermodulation signal,

wherein the transformed signal is provided by performing a Fourier transform of the derotated baseband signal, performing the Hilbert transform in the frequency domain, combining an output of the Hilbert transform with the signs and performing an inverse Fourier transform on the combined output.

The Hilbert transform may be performed by multiplying the Fourier transformed baseband signal by $-j$ for frequencies greater than zero.

According to a third aspect there is provided an FMCW radar transceiver comprising:

a signal generator configured to generate a transmit signal;

a transmit amplifier configured to amplify the transmit signal;

a transmit antenna configured to receive the amplified transmit signal from the transmit amplifier;

a receive antenna;

a receiver amplifier configured to receive a signal from the receive antenna;

a mixer configured to mix an amplified signal from the amplifier with the transmit signal from the signal generator to provide an analog baseband signal;

an analog to digital converter (ADC) configured to receive the analog baseband signal from the mixer; and

a phase noise correction module according to the second aspect configured to receive the digital baseband signal from the ADC and provide the output phase noise corrected signal.

The FMCW radar transceiver may further comprise a range Doppler module configured to receive the output phase noise corrected signal and output distance and velocity information of one or more targets in the signal from the receive antenna.

According to a fourth aspect there is provided an FMCW radar transceiver system comprising a plurality of FMCW radar transceivers according to the third aspect, further comprising a data processing unit configured to receive output distance and velocity information from each range Doppler module.

These and other aspects of the invention will be apparent from, and elucidated with reference to, the embodiments described hereinafter.

Brief description of Drawings

Embodiments will be described, by way of example only, with reference to the drawings, in which:

Figure 1 is a schematic diagram of a multiple transceiver FMCW radar system with phase noise correction;

Figure 2 is a plot of phase noise decorrelation for a single and multiple LO transceiver system observed at an IF frequency offset of 55 kHz;

Figure 3 is a plot of phase noise decorrelation for a single and multiple LO transceivers system observed at an IF frequency offset of 1 MHz;

Figure 4 illustrate plots of phase noise decorrelation for bistatic (multiple LO) and mono-static (single LO) transceiver systems;

Figure 5 is a schematic diagram of an example phase noise detector for a phase noise correction module;

Figure 6 is a schematic diagram of an alternative example phase noise detector for a phase noise correction module;

Figure 7 is a schematic diagram of an example phase noise estimation and correction module incorporating an iterative phase noise estimation process;

Figure 8 illustrates and example IQ plot and corresponding real and imaginary plots for an example phase noise correction process on a received signal;

Figure 9 is a plot of a residual noise spectrum corresponding to the example of Figure 8;

Figure 10 is a range spectrum plot of the example of Figures 8 and 9;

Figure 11 is a phase noise time domain plot of the example of Figures 8 to 10.

It should be noted that the Figures are diagrammatic and not drawn to scale. Relative dimensions and proportions of parts of these Figures have been shown exaggerated or reduced in size, for the sake of clarity and convenience in the drawings. The same reference signs are generally used to refer to corresponding or similar feature in modified and different embodiments.

Detailed description of embodiments

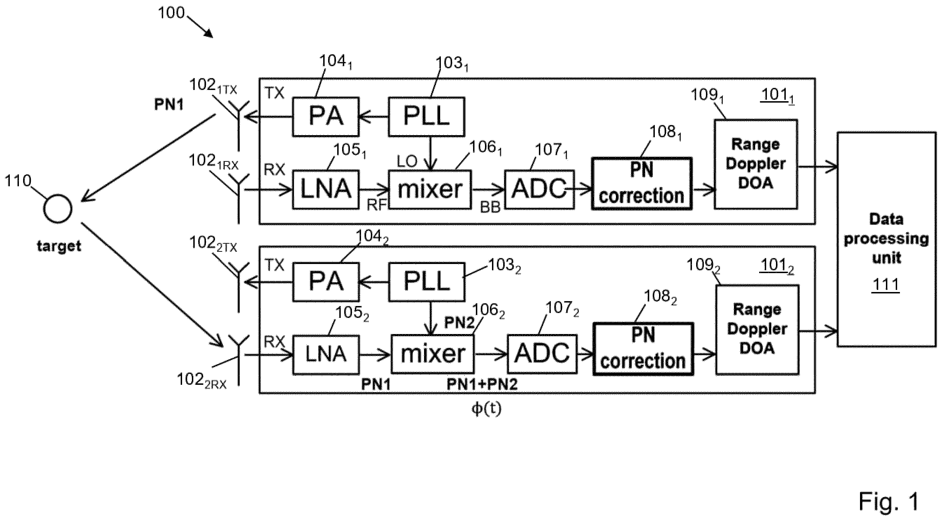

Illustrated in Figure 1 is an example hardware architecture for a multiple transceiver radar system 100, which includes a phase noise digital correction block or module. The phase noise correction block precedes the usual signal processing and target detection of the radar system 100.

The radar system 100 comprises first and second transceivers $101_1$, $101_2$. Each transceiver comprises a transmit aerial $102_{1TX}$, $102_{21X}$ and a receive aerial $102_{2TX}$, $102_{2RX}$. The transmit aerial $102_{1TX}$, $102_{2TX}$ is provided a transmit signal that is generated by a signal generator PLL $103_1$, $103_2$ and amplified by a transmit amplifier PA $104_1$, $104_2$. On the receiver side of each transceiver, a received signal from the receive aerial $102_{2TX}$, $102_{2RX}$ is amplified by a receive amplifier LNA $105_1$, $105_2$ and an amplified signal provided to a mixer $106_1$, $106_2$. The mixer $106_1$, $106_2$ mixes the amplified signal with the transmit signal from the signal generator $103_1$, $103_2$ to generate an analog baseband signal, which is provided to an ADC $107_1$, $107_2$. The ADC converts the analog baseband signal to a digital baseband signal and provides this digital baseband signal to a phase noise correction module $108_1$, $108_2$. The phase noise correction module $108_1$, $108_2$ removes phase noise from the digital baseband signal and provides a phase noise corrected signal to a range doppler DOA (direction of arrival) module $109_1$, $109_2$, which determines the distance to and relative velocity of a target 110 identified in the baseband signal, together with a measure of the direction of arrival of the received signal, all of which can be used in combination by a data processing unit 111 to identify one or more targets in view of the transceiver system 100.

As described above, phase noise may be introduced into signals throughout the transceiver system 100, examples of which are indicated in Figure 1. A first phase noise component PN1 is introduced in the transmit signal from the first transmit aerial $102_{1TX}$. This is passed through to the received signal at the second transceiver and mixed with a second phase noise component PN2 introduced by the second signal generator $103_2$. A combination of both phase noise components PN1+PN2, together termed $\phi(t)$, is then present in the analog baseband signal provided to the ADC $107_2$ in the second transceiver $101_2$. A similar combination of phase noise components is provided to the ADC $107_1$ in the first transceiver $101_1$. The phase noise correction module $108_1$, $108_2$ in each transceiver is configured to separate out this phase noise and subtract it from the received digital baseband signal, as described in further detail below.

The method of removing phase noise described herein aims to significantly suppress phase noise, especially (although not exclusively) in the case of multiple PLL's operating simultaneously, for example in the case of imaging or distributed radar. The method can significantly improve dynamic range in the vicinity of strong targets, where the spectral shoulders of the phase noise may be the dominant limiting factor of the sensor dynamic range.

The method may be termed blind because it operates directly on the received baseband signal and does not require a synthetic target on chip, a second measured signal or a specific antenna configuration. The method is suitable for multiple transceiver radar systems but is also suitable for a single transceiver system.

The method in essence comprises first estimating the realization of phase noise and secondly cancelling the phase noise from the received baseband signal. Since the objective is to cancel phase noise, the realization rather than its statistics must be estimated with short latency. In conceptual terms, a particular example method may be described with the following steps:

1. Operate on the baseband beat signal. If the radar receiver is real only (non-IQ), operate by analytic extension, i.e., keep only the positive range frequencies.

2. Identify the strongest spectral peak.

3. Demodulate (frequency shift and normalize) the complex baseband, to bring this strongest beat frequency to DC, and its phase locked on the IQ plane on the point 1+j0.

4. Separate the resulting signal into real and imaginary parts. The imaginary part will contain most of the phase noise, overlapped with intermodulation beat signals (at the frequency difference between the input beat frequencies and the frequency of the main peak). The real part will contain little phase noise and mainly intermodulation terms.

5. Operate a Hilbert Transform (HT) on the real part and subtract it from the imaginary part to isolate the phase noise realization for each chirp.

6. In an optional step, condition or validate the spectrum of this realization based on a-priori knowledge of phase noise spectral density, when available. In a particular example, PN may have a symmetrical spectrum which is convolved around each target. The PN spectrum may also have a regular spike-free amplitude. In most applications such amplitude will be a-priori known within a degree of uncertainty, so can be accounted for in this step.

7. Subtract the phase noise realization from the incoming signal. All the receivers in a multiple transceiver system will experience the same phase noise, so the same estimate may be used for all receiver paths of a transceiver system.

In a general aspect therefore, an example method of removing phase noise from a demodulated baseband signal involves separating the baseband signal into a real part and an imaginary part, performing a Hilbert transform on the real part, subtracting this from the imaginary part to obtain a phase noise signal estimate and then subtracting this estimate from the baseband signal to provide a phase noise corrected signal.

The following provides a more detailed description of example implementations of the method.

Signal model

Assume a single chirp $s(t)$ is transmitted by a radar transceiver, defined by:

$$s(t) = e^{j2\pi(f_c t + \frac{\beta t^2}{2})} e^{jPN(t)}, \quad t \in [0, T] \tag{1}$$

where $f_c$ denotes the carrier frequency, $\beta = B/T$ is the chirp slope, $T$ is the chirp duration and $PN(t)$ is the undesired phase noise term, for example due to hardware imperfections. The transmitted signal $s(t)$ impinges on targets present in the field of view of the transceiver and reflects back to the transceiver (and to other transceivers in the case of a distributed system) with a time delay $\tau_i$ proportional to the target range. The received signal $r(t)$ is defined as:

$$r(t) = \Sigma_i A_i e^{j\theta_i} e^{j2\pi(f_c(t-\tau_i) + \frac{\beta(t-\tau_i)^2}{2})} e^{jPN(t-\tau_i)} + w(t) \tag{2}$$

where multiple point-like targets are assumed present in the scene with the corresponding time delays $\tau_i$ and complex amplitudes $A_i e^{j\theta_i}$ that include the back-scattering coefficients and propagation and hardware induced constant phase shifts with no loss of generality and w(t) denotes additive noise.

The receiver performs a deramping, dechirping or stretch processing operation, mixing the received signal with the locally generated version of the chirp (the transmitted signal in case of a single LO (local oscillator) radar transceiver or its copy generated by another LO in case of a multiple transceiver system). The resulting analog baseband signal $x(t)$ then can be written as:

$$x(t) = \Sigma_i A_i e^{j(\omega_i t + \theta_i)} e^{j\phi_i(t)} + w(t) \tag{3}$$

where $\phi(t)$ is derived from the phase noise realization as shown below and thus is a random process with zero mean and limited bandwidth (e.g. 1MHz). This process is filtered by a comb filter $g_i$ originating from the mixing operator and target delay according to:

$$\phi_i(t) = (g_i * \phi)(t) \tag{4}$$

The sign of the comb filter depends on the nature of the LO signals at the transmitter and receiver. When the same LO signal is used both at transmitter and receiver, a given phase noise realization PN(t) is used both for generating the signal and mixing it back to baseband. As a result, at the mixer output this phase noise realization will appear subtracted from its delayed replicas, and a minus sign in $g_i$ will represent phase noise decorrelation at close range:

$$g_{i,HPF}(t) = \delta(t) - \delta(t - \tau)$$

$$G_{i,HPF}(\tau, \Delta f) = |2 \sin(\pi \Delta f \tau)|$$

$$\phi(t) = PN(t) \tag{5}$$

given that:

$$FT\{\delta(t) - \delta(t - \tau)\} = 1 - e^{-j\omega\tau} \rightarrow |G| = |2\sin\left(\frac{\omega\tau}{2}\right)|$$

For independent LO signals (i.e. multiple transceivers), we need to distinguish between two approaches. A first approach is to process each bistatic individually. In this case the phase noise in each bistatic will be just another phase noise random process with 3dB more power than each individual LO.

In fact $Bi_{12}$ (RX1 from TX2) will have phase noise $PN_{12} = PN_1(t)-PN_2(t-\tau)$; similarly for $PN_{21} = PN_2(t)-PN_1(t-\tau)$.

Since the two PN signals are uncorrelated, their addition will not be a filter but just an increase of 3dB in power as mentioned. This is advantageous because it does not limit the application to a maximum range.

The second approach is to first do a conjugate product of $Bi_{12}$ with $Bi_{21}$ and then remove the phase noise from this after scaling it back a factor 2. Such an approach has immediately a 6dB worse PN range, making it prone to wrap-around errors. Such an approach is typically done when considering co-located antennas, to get back the decorrelation gain at short distances.

In fact we can see $PN(Bi_{12}*Bi_{21}{}^*) = PN_{12}-PN_{21}= PN_1(t)-PN_2(t-\tau)-( PN_2(t)-PN_1(t-\tau)) = (PN_1(t)-PN_2(t))+ (PN_1(t-\tau)-PN_2(t-\tau)) = conv(PN_1(t) - PN_2(t), (\delta(t) + \delta(t - \tau))$.

For the latter (less advantageous) conjugate product approach the resulting filtering of the phase noise is:

$$g_{i,LPF}(t) = \delta(t) + \delta(t - \tau)$$

$$G_{i,LPF}(\tau, \Delta f) = |2\cos(\pi \Delta f \tau)|$$

$$\phi(t) = PN_1(t) - PN_2(t) \qquad (6)$$

This latter case is more challenging because phase noise will dominate the spectrum also at close range (small $\tau_i$). In the case of a single LO as described in equation (5), the phase noise is significantly suppressed (e.g. in the order of 30 dB), for close by targets, by the decorrelation function implicit in that comb filter. This 30dB suppression is true for R <= 14m. In fact $G_{i,HPF}(\tau, \Delta f) = 2|\sin(\pi \Delta f \tau)|; \tau = 2R/c$: $G_{i,HPF}(R, \Delta f) \sim 4\pi \Delta f R/c$. $\Delta f = 55e3$ corner value of PN spectrum where PN starts decaying at more than 20dB/decade, since decorrelation HPF is +20dB decade, this is also the frequency offset of the peak after decorrelation: 20*log10(4*pi*55e3*14/3e8)=-30dB.

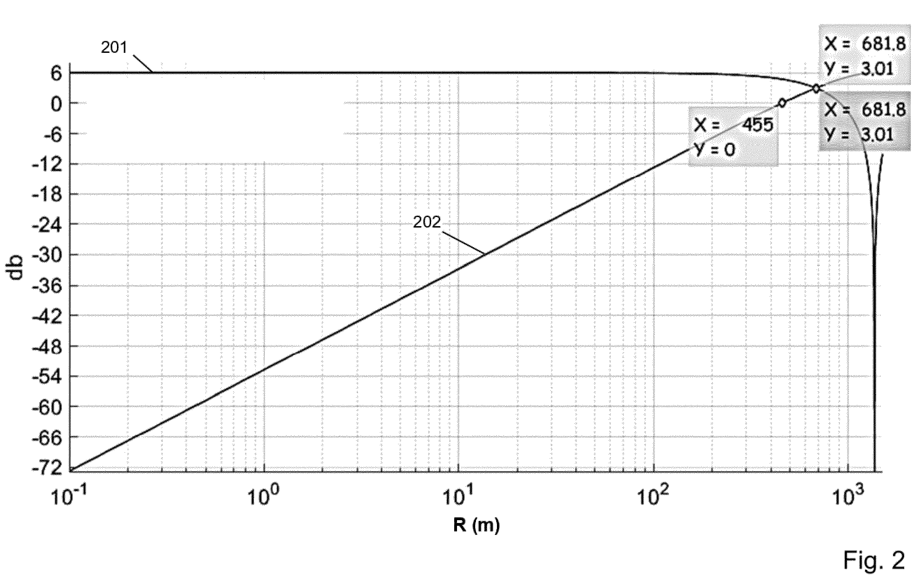

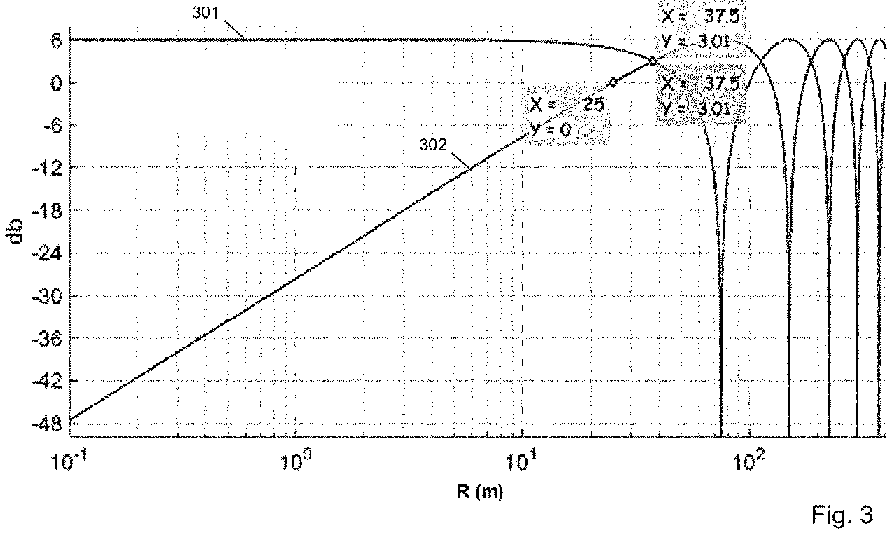

Figures 2 and 3 illustrate phase noise decorrelation for a single LO 201, 301 transceiver (according to equation 5) and a multiple LO transceiver system 202, 302 (according to equation 6) at two frequency offsets, with a 55 kHz offset in Figure 2 and a 1 MHz offset in Figure 3. For a single LO, the 1MHz offset measured phase noise is on par with the transmitter phase noise (PLL specification) at R=25m, and 3dB higher at R=37.5m. For a multiple LO, the receiver phase noise at 1MHz offset will be reduced by 3dB at R=37.5m (this is a limitation of the above-mentioned conjugate product approach). For far away targets, thermal noise is dominant over phase noise and it is often not a concern.

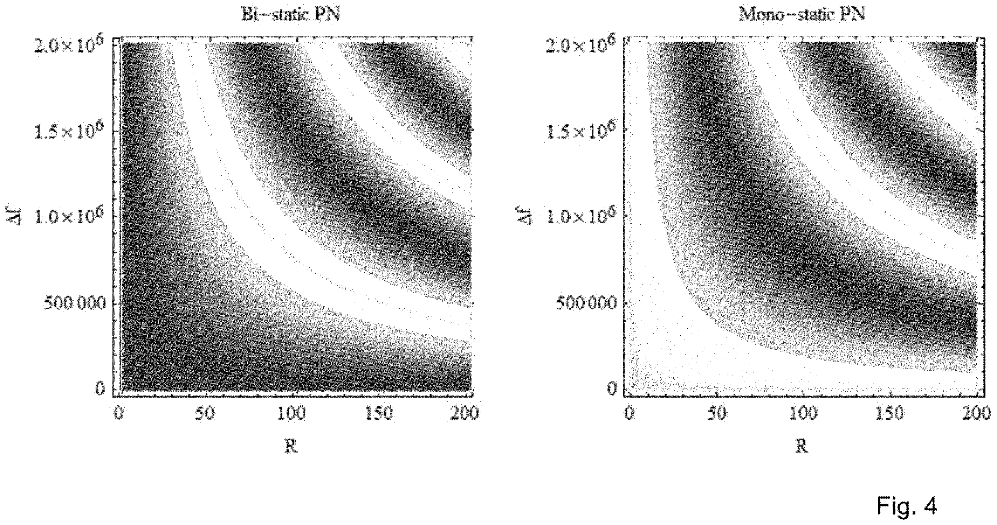

Figure 4 illustrates phase noise decorrelation for bistatic (i.e. multiple LO transceiver systems according to equation 6) and mono-static (single LO transceivers according to equation 5), in which darker regions indicate higher phase noise.

For the case of multiple LO signals at the transmitter and receiver, it is convenient to simplify the signal model, upon realizing that within a certain close range the LPF (low pass filter) function in equation 6 above can be well approximated by an all-pass. For independent LO signals, each $\phi_i(t)$ is a LPF version of $\phi(t)$ according to:

$$G_{i,LPF}(f_i, \Delta f) = 2\left|\cos\left(2\pi \frac{\Delta f f_i}{2 \beta}\right)\right| \qquad (7)$$

where $f_i$ is the beat frequency of target $i$ and $\Delta f$ is the one-sided phase noise bandwidth around that target. The frequency interval where the LPF effect can be considered negligible is $\Delta f_{3dB}$, i.e. the filter's 3dB cut off frequency.

$$\frac{\Delta f_{3dB}\, f_i}{2\,\beta}\, 2\pi = \frac{\pi}{4}$$

$$\Delta f_{3dB} = \frac{\beta}{4 f_i} = \frac{c}{8\,R_i} \qquad (8)$$

Typical phase noise spectra with current radar hardware tend to have a flat top spectrum with a bandwidth of about 55 kHz one sided (PLL bandwidth), and a $1/f^{\alpha}$ power slope from there on, with $\alpha \geq 2$. For this reason, a total one-sided bandwidth of $\Delta f_{3dB}$ =1 MHz is sufficient to capture most of the PN power (e.g. for $\alpha$ = 2.4 the corner value at 1MHz compared to the center value is lower by 24*log10(1e6/55e3) = 30dB. There is a maximum range below which the LPF in the equation 7 filter cut off will not cut into this 1 MHz band, in which region the LPF can be neglected. This range can be defined as:

$$R_{\mathrm{max,AllPass}} = \frac{c}{8e6} = 37.5\ m \qquad (9)$$

If we restrict the phase noise estimation for the multiple LO case to ranges inferior to this limit, the phase noise can be factored out by rewriting equation 3 as follows:

$$x(t) = e^{j\phi(t)}\Sigma_i A_i e^{j(\omega_i t + \theta_i)} + w(t) \qquad (10)$$

The power spectrum $\Phi_{xx}(f)$ of the phase noise in radians$^2$/Hz can be assumed to be approximately known. $\Phi_{xx}(f)$ can be considered unfiltered for the band and range of interest (1MHz, 37.5m).

Phase Noise estimation

Among all reflections $A_i$ in equation 10, the largest one, $A_0$, is selected and its corresponding frequency and phase are given by $\omega_0, \theta_0$. There could be multiple targets within one range frequency bin, in which case $A_0$ will represent the combined strength of these targets, i.e. $A_0$ is the amplitude of the range DFT at its peak. The frequency $\omega_0$ and the amplitude $A_0$ will need to be estimated accurately, which in practice means not just on the FFT grid but with a sub-grid accuracy using for example an interpolation method.

Using these estimated values ($\omega_0$, $A_0$, $\theta_0$), an auxiliary signal $\tilde{x}_0 = \frac{1}{A_0} e^{-j(\omega_0 t + \theta_0)}$ can be generated, which is used to de-rotate the full IF signal into a signal $x_1$, such that the main target will appear at DC in the frequency domain and around the point (1+j0) in the IQ plane, resulting in the baseband signal $x_1(t)$ then being expressed as:

$$x_1(t) = \frac{1}{A_0} e^{-j(\omega_0 t + \theta_0)} x(t) \approx \left(e^{j\phi(t)} + \Sigma_{i\neq 0} A_i e^{j((\omega_i - \omega_0)t + \theta_i - \theta_0 + \phi(t))}\right)$$

$$(11)$$

In the following, the term x is used for the input signal with phase noise present, $x_1$ for the de-rotated signal, and $x_2$ for the denoised signal.
Splitting the de-rotated signal $x_1(t)$ from equation 11 into its real and imaginary parts provides:

$$x_{1,Re}(t) = \cos\big(\phi(t)\big) + \Sigma_{i \neq 0} A_i \cos((\omega_i - \omega_0)t + \theta_i - \theta_0 + \phi(t))$$

$$x_{1,Im}(t) = \sin\big(\phi(t)\big) + \Sigma_{i \neq 0} A_i \sin((\omega_i - \omega_0)t + \theta_i - \theta_0 + \phi(t)) \quad (12)$$

$$x_{1,Re}(t) \approx 1 \quad + \Sigma_{i \neq 0} A_i \cos(\Delta\omega_i t + \Delta\theta_i + \phi(t))$$

$$x_{1,Im}(t) \approx \phi(t) + \Sigma_{i \neq 0} A_i \sin(\Delta\omega_i t + \Delta\theta_i + \phi(t)) \quad (13)$$

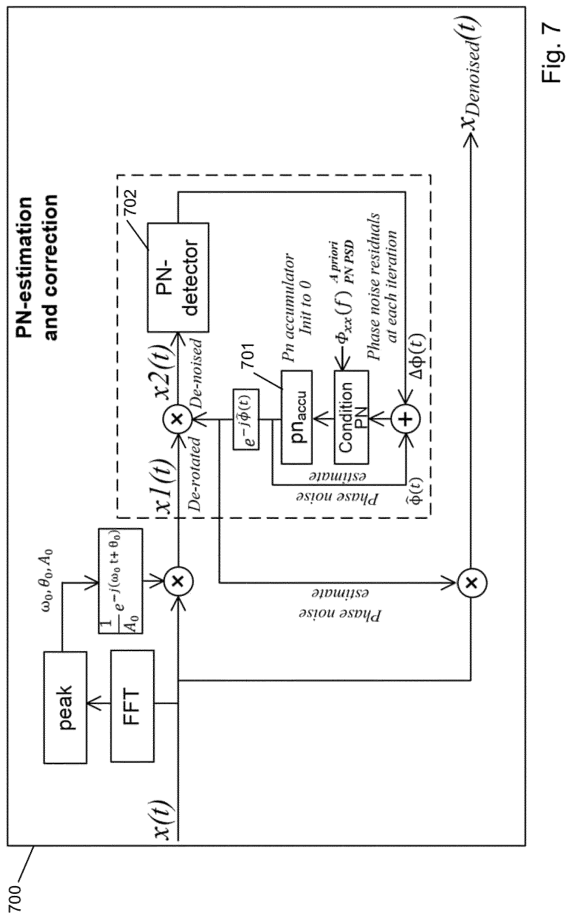

The approximate functions in equation 13 depend on $\cos(\phi)$ being equal to 1 when the phase noise is close to zero. In practice, an iterative approach, described below in relation to the example of Figure 7, may be used so that residuals will converge to zero as the phase noise is removed in each iteration.

In the real part of equation 10, the term $\cos(\phi(t)) \sim 1$ (the RMS value of the phase noise is assumed about 10 degrees here; the method can be unstable for large phase noise about 30 degrees RMS), therefore there is little information about phase noise in the real part. The SNR is therefore much better in $x_{1,Re}(t)$ than in $x_{1,Im}(t)$ due to suppression of phase noise on this branch.

In the imaginary part, we observe that the signal of interest $\phi$ is overlapped with undesired Inter-Modulation (IM) tones $\Delta\omega_i = (\omega_i - \omega_0)$. These IM tones can be removed to extract phase noise from the signal as defined by equation 13.

An approach to removing the IM tones is to extract them from the real part and then subtract them from the imaginary part. For this to be mathematically possible, all the terms in real and imaginary parts must be different in absolute offset frequency value. If two identical and opposite $\Delta\omega_i$ terms exist, depending on $\Delta\theta_i$ some terms might disappear from the real and not from the imaginary part or vice versa. This is commented on further below.

First, we recall a property of the Hilbert Transform:

$$\mathcal{H}(\cos(\omega t + \theta)) = sgn(\omega)\sin(\omega t + \theta)$$

$$\mathcal{H}(\sin(\omega t + \theta)) = -sgn(\omega)\cos(\omega t + \theta) \quad (14)$$

Applying the Hilbert Transform (HT) to the real part $x_{1,Re}(t)$ of equation 13, the transformed real part $x'_{1,Re}(t)$ can be expressed as:

$$x'_{1,Re}(t) = \mathcal{H}\big(x_{1,Re}(t)\big) \approx \Sigma_{i \neq 0} A_i \, s_i \sin(\Delta\omega_i t + \Delta\theta_i + \phi(t))$$

$$s_i = sgn(\Delta\omega_i) \quad (15)$$

The signal $x'_{1,Re}(t)$ in equation 15 can be compared against the imaginary part $x_{1,Im}(t)$ in equation 13. Except for the as-yet unknown signs $s_i$, $x'_{1,Re}$, this contains all the undesired IM terms which we need to subtract from $x_{1,Im}(t)$ to obtain an estimate of the phase noise $\phi$.

$$x''_{1,Re}(t) = \Sigma_{i \neq 0} A_i \, \widehat{s_i} \, s_i \sin(\Delta\omega_i t + \Delta\theta_i + \phi(t))$$

$$\phi(t) \approx x_{1,Im}(t) - x1''_{Re} \quad (16)$$

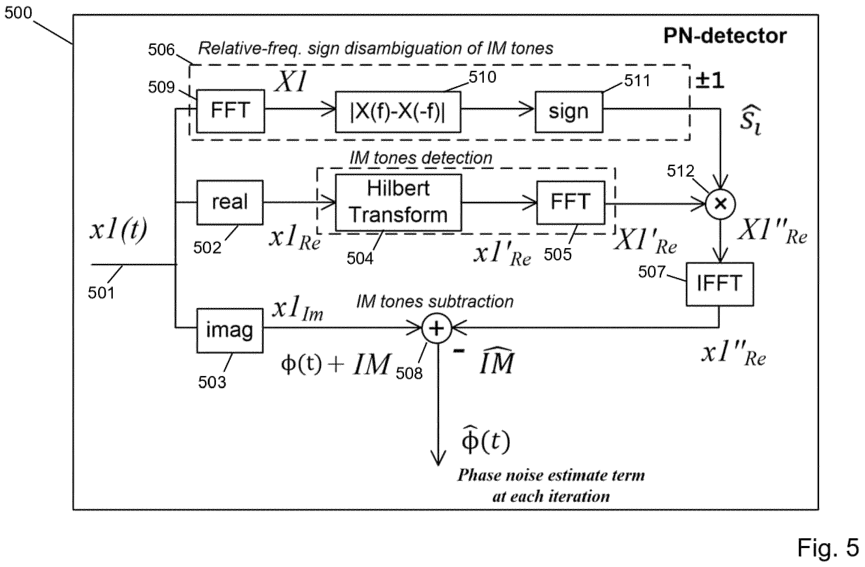

Detecting the signs $s_i$ is possible if the IM products are not too far drowned into phase noise. We will extract this sign from the full complex signal $x_1(t)$, comparing its positive vs negative frequencies. In this equation and the block diagrams of Figures 5, 6 and 7, the discrete counterpart $n$ of continuous time $t$ is used, i.e. $t = n/f_s$, $f_s$ is the ADC sampling frequency and Ta the acquisition time within one chirp:

$$X_1(k) = FFT(x_1(n))$$

$$\widehat{s_i}(k) = sgn(|X_1(k)| - |X_1(-k)|)$$

$$X'_{1,Re}(k) = FFT(x'_{1,Re}(n))$$

$$x''_{1,Re}(n) = IFFT(X'_{1,Re} * \widehat{s_i})$$

$$\widehat{\phi}(n) \approx x_{1,Im}(n) - x''_{1,Re}(n) \qquad (17)$$

The processing flow of the phase noise detector 500, which reflects the equations above, is illustrated in Figure 5. The phase noise detector 500 is part of the phase noise correction module $109_1$, $109_2$ of the transceiver system 100 illustrated in Figure 1, including all components except for derotation of the baseband signal and subtraction of the estimated phase noise from the baseband signal.

The derotated baseband signal $x_1(t)$ is received at an input 501 of the phase noise detector 500. First and second branches 502, 503 separate the baseband signal $x_1(t)$ into a real part $x_{1,Re}(t)$ and an imaginary part $x_{1,Im}(t)$. A Hilbert transform 504 is then performed on the real part $x_{1,Re}(t)$ to produce an intermediate transformed signal $x'_{1,Re}$. This is further processed by being transformed into the frequency domain with an FFT module 505 and combined at a combining node 512 with an output $\widehat{s_i}(k)$ of a third branch 506 (described below) before being transformed back into the time domain by an inverse FFT module 507 to provide a transformed signal $x''_{1,Re}$. The transformed signal $x''_{1,Re}$ and the imaginary part $x_{1,Im}(t)$ are provided to a subtraction module 508, which subtracts the transformed signal $x''_{1,Re}$ from the imaginary part $x_{1,Im}(t)$ to obtain a phase noise signal estimate $\hat{\phi}(n)$. The phase noise signal estimate $\hat{\phi}(n)$ can then be subtracted from the baseband signal $x_1(t)$ to provide a phase noise corrected signal $x_2(t)$. The process may then repeat in an iterative way to further reduce the phase noise.

The third branch 506 extracts the signs $\widehat{s_i}(k)$ from the baseband signal $x_1(t)$ in the frequency domain for disambiguation of IM tones. The third branch 506 comprises an FFT module 509, which converts the baseband signal $x_1(t)$ into a frequency domain signal $X_1(k)$. A normalising module 510 subtracts the negative frequencies from the positive frequencies to provide an intermodulation signal. After such subtraction the amplitude spectrum of phase noise which is symmetric around f=0 will have vanished, and only IM tones will remain. A sign module 511 then outputs the signs $\widehat{s_i}(k)$ of the intermodulation signal to the combining node 512 to be combined with the intermediate transformed signal $x'_{1,Re}$.

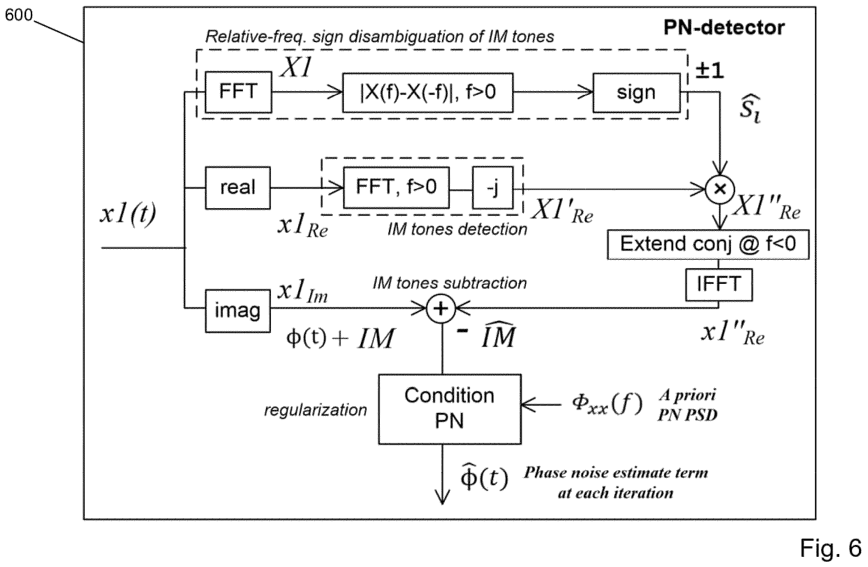

An alternative example PN-detector 600, which reflects the equations above, is illustrated in Figure 6. The PN-detector 600 differs from the detector 500 in Figure 5 by swapping the linear operators Hilbert Transform (HT) and FFT, and by exploiting the conjugate symmetry of real signals spectra, thereby computing the IM tones only using half band (f>0). The HT in the frequency domain corresponds to the product with -$j \cdot$ sgn(f), which is then a multiplication by -j at f>0. The DC term in the real part $x_{1,Re}(t)$ is omitted by starting the FFT on the real part from f>0; -$j \cdot$ sgn(f) would zero this frequency.

The block denoted "Condition PN" in Figure 6 is utilized to limit the leakage of undesired intermodulation products. This block utilizes a priori, i.e. predetermined, knowledge of the phase noise spectrum (PLL characteristic) to remove intermodulation products and improve the robustness of the solution in presence of multiple targets in the vicinity of each other. This is particularly needed for the case of exactly symmetric targets around the selected FFT peak, with offset frequencies $\pm\Delta\omega$. In this case some of the terms in equation 13 may disappear from either the real or the imaginary parts. For the sake of illustration this situation is depicted in equation 18 below.

$$x_{1,Re}(t) \approx 1 \quad + A_1 \cos(\Delta\theta_1 + \Delta\omega\, t) + A_2 \cos(\Delta\theta_2 - \Delta\omega\, t)$$

$$x_{1,Im}(t) \approx \phi(t) + A_1 \sin(\Delta\theta_1 + \Delta\omega\, t) + A_2 \sin(\Delta\theta_2 - \Delta\omega\, t)$$

$$x'_{1,Re}(t) \approx \quad A_1 \sin(\Delta\theta_1 + \Delta\omega\, t) - A_2 \sin(\Delta\theta_2 - \Delta\omega\, t)$$

$$x_{1,Im}(t) - x'_{1,Re}(t) = \quad \phi(t) + 2\, A_2 \sin(\Delta\theta_2 - \Delta\omega\, t) \qquad (18)$$

It can be seen from this that the HT of the real part, $x'_{1,Re}(t)$, will now not be able to remove the unwanted tone, but instead will plug it back in at the opposite side of the main target. Such IM tones cannot be allowed to pass, or they will either offset existing targets, or create new targets.

Phase noise Estimation and Compensation Loop

Figure 7 illustrates an example phase noise correction module 700 implementing an iterative scheme incorporating the PN detector of either Figure 5 or Figure 6, in which an estimate $\hat{\phi}(t)$ of $\phi(t)$ is stored into an accumulator register 701, which is initialized to 0, and further converted to its phasor representation $e^{-j\hat{\phi}(t)}$ to demodulate the phase noise away from the de-rotated signal $x_1(t)$, into the de-noised signal $x_2(t)$.

At the first iteration $x_2(t)$ will fully contain the input phase noise. The PN detector 702, as described above, will produce a first phase noise estimate. This is then conditioned by prior knowledge about phase noise spectral properties and added to the accumulator 701 for the next iteration. At the second iteration the signal $x_2(t)$ will be cleaner and the PN detector 702 will produce a residual phase noise estimate $\Delta\phi(t)$. At each iteration this residual will be smaller, and the accumulator output $\hat{\phi}$ will come closer to the true phase noise $\phi$. The power of the residual and its time evolution can be used to stop the loop or signal a malfunction. In situations with a high SNR, the DC value of $x_2(t)$ will keep increasing as long as more phase noise is being removed. This can also be used to decide whether estimation is completed and/or successful.

Simulations

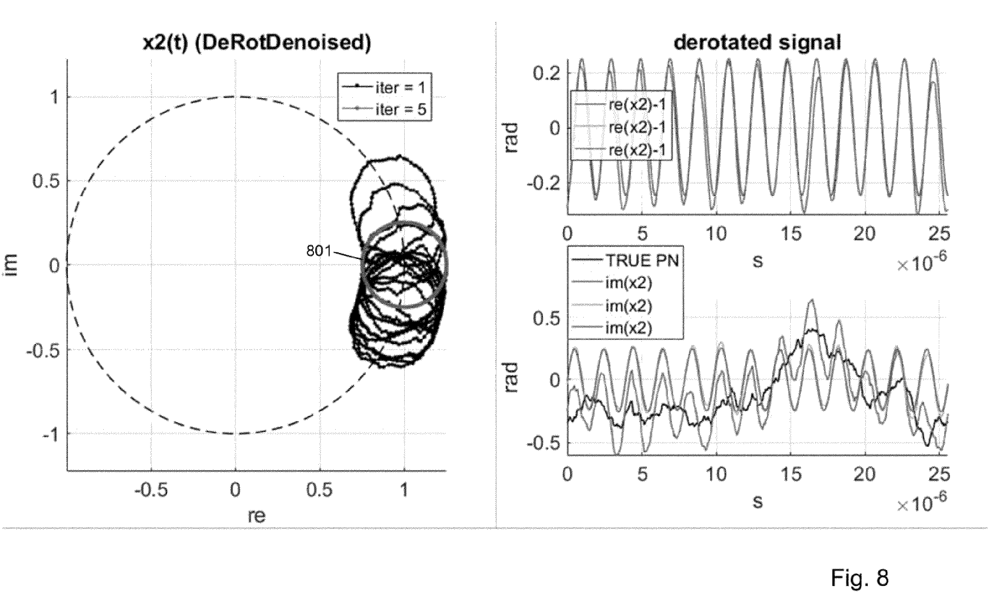

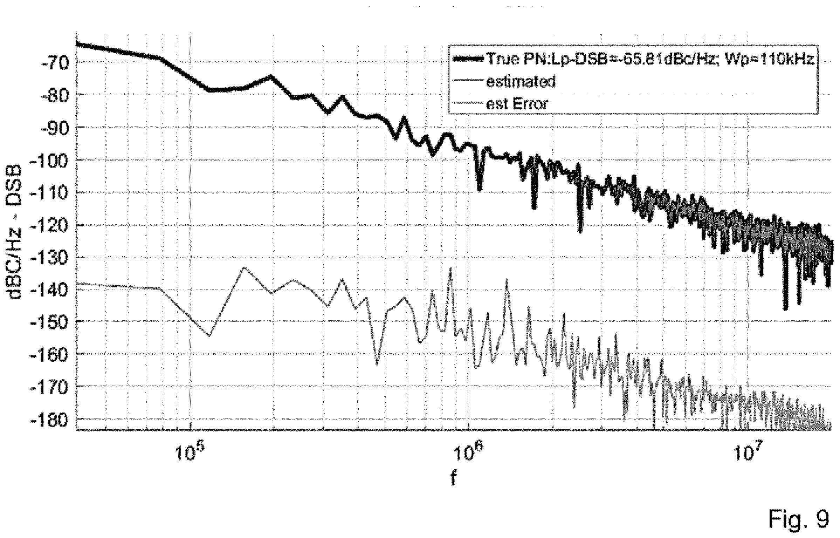

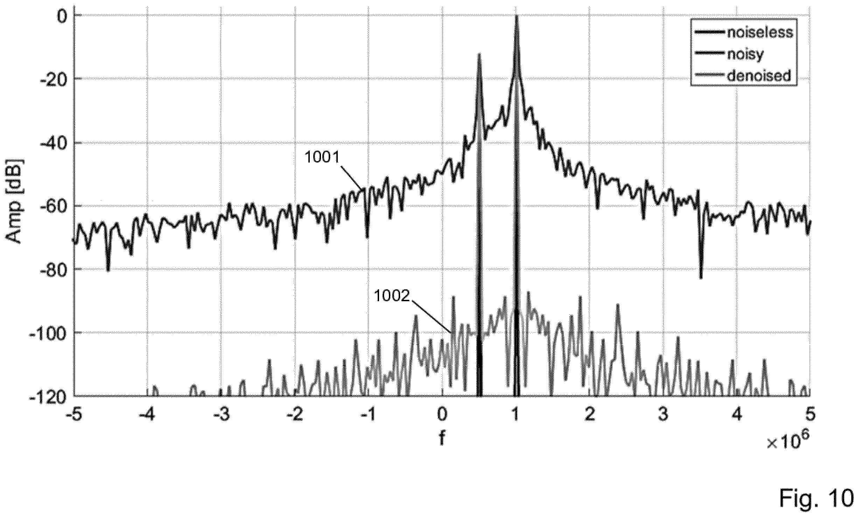

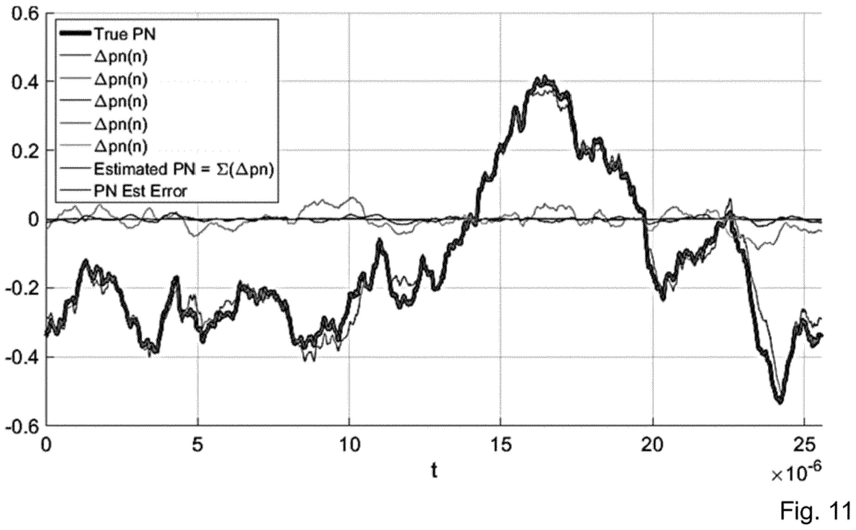

Consider the following example with radar parameters of acquisition time $T_{acq} = 25.6\mu s$ and fs = 40 MHz. Figure 8 presents an IQ plane of the de-rotated signal $x_1(t)$, along with plots of the real and imaginary parts. The curves show the result of successive iterations, resulting in a final estimate (after five iterations in this case) that converges to a circle 801 in the IQ plane, corresponding to a plot in the real part that indicates a secondary target, with other random components cleaned up. The left plot represents the $x_2(t)$ signal, which shows a first tone at 0 Hz (corresponding to a main target) and second at an offset (corresponding to a secondary target), with phase noise removed after in this case five iterations. The right plots represent the real and imaginary values as a function of time. The residual phase noise spectrum, illustrated in Figure 9, demonstrates about a 70 dB improvement. This similarly maps to the obtained range spectrum illustrated in Figure 10, in which the noisy spectrum 1001 is transformed to a denoised spectrum 1002, demonstrating about 60 dB of phase noise rejection and therefore a dynamic range gain with the utilization of the proposed algorithm. This result is confirmed with the time realization of the estimated phase noise illustrated in Figure 11 that accurately follows the simulated realization. Similar results are obtained with multiple targets present. For example, with four targets present in the scene the algorithm still converges in only a few iterations and demonstrates significant improvement in the dynamic range of the range profile.

The method and transceiver system described herein enables a noisy signal from a transceiver to be cleaned from phase noise in postprocessing, i.e. in the digital domain after reception and down-conversion, without relying on any other signal and without imposing constraints on the antenna array and/or on the RF radar hardware. The proposed solution is carried out before range Doppler processing and can be carried out chirp by chirp. This can be particularly useful because it does not require storing the radar frame.

From reading the present disclosure, other variations and modifications will be apparent to the skilled person. Such variations and modifications may involve equivalent and other features which are already known in the art of radar transceivers, and which may be used instead of, or in addition to, features already described herein.

For the sake of completeness it is also stated that the term "comprising" does not exclude other elements or steps, the term "a" or "an" does not exclude a plurality, a single processor or other unit may fulfil the functions of several means recited in the claims and reference signs in the claims shall not be construed as limiting the scope of the claims.

**Claims**

1. A method of removing phase noise from a baseband signal ($x(t)$) in an FMCW radar transceiver ($101_1$), the method comprising:

   i) receiving the baseband signal ($x(t)$);
   ii) derotating the baseband signal ($x(t)$) to provide a derotated baseband signal ($x_1(t)$);
   iii) separating the derotated baseband signal ($x_1(t)$) into a real part ($x_{1,Re}(t)$) and an imaginary part ($x_{1,Im}(t)$);
   iv) performing a Hilbert transform on the real part ($x_{1,Re}(t)$) to provide a transformed signal ($x''_{1,Re}$);
   v) subtracting the transformed signal ($x''_{1,Re}$) from the imaginary part ($x_{1,Im}(t)$) to obtain a phase noise signal estimate ($\hat{\phi}(t)$); and
   vi) subtracting the phase noise signal estimate ($\hat{\phi}(t)$) from the baseband signal ($x(t)$) to provide a phase noise corrected signal ($x_2(t)$).

2. The method of claim 1, comprising:

   vii) converting the derotated baseband signal ($x_1(t)$) to a frequency domain signal ($X_1(k)$);
   viii) subtracting magnitudes of negative frequencies of the frequency domain signal ($X_1(k)$) from positive frequencies of the frequency domain signal ($X_1(k)$) to provide an intermodulation signal; and

   ix) determining signs ($\widehat{s_i}(k)$) of the intermodulation signal,

   wherein step iv) comprises performing a Fourier transform of an output of the Hilbert transform, combining an output of the Fourier transform with the signs ($\widehat{s_i}(k)$) and performing an inverse Fourier transform on the combined output to provide the transformed signal ($x''_{1,Re}$).

3. The method of claim 1, comprising:

   vii) converting the derotated baseband signal ($x_1(t)$) to a frequency domain signal ($X_1(k)$);
   viii) subtracting magnitudes of negative frequencies of the frequency domain signal ($X_1(k)$) from positive frequencies of the frequency domain signal ($X_1(k)$) to provide an intermodulation signal; and
   ix) determining signs ($\widehat{s_i}(k)$) of the intermodulation signal,

   wherein step iv) comprises performing a Fourier transform of the derotated baseband signal ($x_1(t)$), performing the Hilbert transform in the frequency domain, combining an output of the Hilbert transform with the signs ($\widehat{s_i}(k)$) and performing an inverse Fourier transform on the combined output to provide the transformed signal ($x''_{1,Re}$).

4. The method of claim 3, wherein the Hilbert transform is performed by multiplying the Fourier transformed baseband signal by $-j$ for frequencies greater than zero.

5. The method of any preceding claim, wherein step v) comprises removing a predetermined phase noise spectrum ($\phi_{xx}(f)$) from the phase noise signal estimate ($\hat{\phi}(t)$).

6. The method of claim 5, wherein steps iii) to v) are repeated to obtain a more accurate phase noise signal estimate ($\hat{\phi}(t)$).

7. The method of any preceding claim, wherein step ii) comprises identifying a spectral peak in the baseband signal ($x(t)$) and demodulating the baseband signal ($x(t)$) about the spectral peak.

8. The method of claim 7, wherein demodulating the baseband signal ($x(t)$) comprises frequency shifting and normalizing the baseband signal ($x(t)$) to move the identified spectral peak to DC and with a phase of the baseband signal ($x(t)$) at +1 on the IQ plane.

9. A phase noise correction module ($108_1$) for an FMCW radar transceiver system (100), the phase noise correction module ($108_1$) configured to:

   i) receive an input baseband signal ($x(t)$);

ii) derotate the baseband signal $x(t)$ to provide a derotated baseband signal ($x_1(t)$);

iii) separate the derotated baseband signal ($x_1(t)$) into a real part ($x_{1,Re}(t)$) and an imaginary part ($x_{1,Im}(t)$);

iv) perform a Hilbert transform on the real part ($x_{1,Re}(t)$) to provide a transformed signal ($x''_{1,Re}$);

v) subtract the transformed signal from the imaginary part to obtain a phase noise signal ($\hat{\phi}(n)$); and

vi) subtract the phase noise signal ($\hat{\phi}(n)$) from the input baseband signal ($x(t)$) to provide an output phase noise corrected signal ($x_2(t)$).

10. The phase noise correction module ($108_1$) of claim 9, further configured to:

vii) convert the derotated baseband signal ($x_1(t)$) to a frequency domain signal ($X_1(k)$);

viii) subtract magnitudes of negative frequencies of the frequency domain signal ($X_1(k)$) from positive frequencies of the frequency domain signal ($X_1(k)$) to provide an intermodulation signal; and

ix) determine signs ( $\widehat{s_i}(k)$ ) of the intermodulation signal,

wherein the phase noise correction module is configured to provide the transformed signal ($x''_{1,Re}$) by performing a Fourier transform of an output of the Hilbert transform, combining an output of the Fourier transform with the signs ( $\widehat{s_i}(k)$ ) and performing an inverse Fourier transform on the combined output.

11. The phase noise correction module ($108_1$) of claim 9, further configured to:

vii) convert the derotated baseband signal ($x_1(t)$) to a frequency domain signal ($X_1(k)$);

viii) subtract magnitudes of negative frequencies of the frequency domain signal ($X_1(k)$) from positive frequencies of the frequency domain signal ($X_1(k)$) to provide an intermodulation signal; and

ix) determine signs ( $\widehat{s_i}(k)$ ) of the intermodulation signal,

wherein the transformed signal ($x''_{1,Re}$) is provided by performing a Fourier transform of the derotated baseband signal ($x_1(t)$), performing the Hilbert transform in the frequency domain, combining an output of the Hilbert transform with the signs ( $\widehat{s_i}(k)$ ) and performing an inverse Fourier transform on the combined output.

12. The phase noise correction module ($108_1$) of claim 11, wherein the Hilbert transform is performed by multiplying the Fourier transformed baseband signal by $-j$ for frequencies greater than zero.

13. An FMCW radar transceiver ($101_1$) comprising:

a signal generator ($103_1$) configured to generate a transmit signal;

a transmit amplifier ($104_1$) configured to amplify the transmit signal;

a transmit antenna ($102_{1TX}$) configured to receive the amplified transmit signal from the transmit amplifier ($104_1$);

a receive antenna ($102_{1RX}$);

a receiver amplifier ($105_1$) configured to receive a signal from the receive antenna ($102_{1RX}$);

a mixer ($106_1$) configured to mix an amplified signal from the amplifier ($105_1$) with the transmit signal from the signal generator ($103_1$) to provide an analog baseband signal;

an analog to digital converter, ADC ($107_1$) configured to receive the analog baseband signal from the mixer ($106_1$); and

a phase noise correction module ($108_1$) according to any one of claims 9 to 12 configured to receive the digital baseband signal from the ADC ($107_1$) and provide the output phase noise corrected signal ($x_2(t)$).

14. The FMCW radar transceiver ($101_1$) of claim 13, further comprising a range Doppler module ($109_1$) configured to receive the output phase noise corrected signal ($x_2(t)$) and output distance and velocity information of one or more targets (110) in the signal from the receive antenna ($102_{1RX}$).

15. An FMCW radar transceiver system (100) comprising a plurality of FMCW radar transceivers ($101_1$, $101_2$) according to claim 14, further comprising a data processing unit (111) configured to receive output distance and velocity information from each range Doppler module ($109_1$, $109_2$).

**Patentansprüche**

1. Verfahren zum Entfernen von Phasenrauschen aus einem Basisbandsignal (x(t)) in einem FMCW-Radar-Sende-

empfänger ($101_1$), wobei das Verfahren Folgendes umfasst:

i) Empfangen des Basisbandsignals ($x(t)$);
ii) Derotieren des Basisbandsignals ($x(t)$), um ein derotiertes Basisbandsignal ($x_1(t)$) bereitzustellen;
iii) Aufteilen des derotierten Basisbandsignals ($x_1(t)$) in einen Realteil ($x_{1,Re}(t)$) und einen Imaginärteil ($x_{1,Im}(t)$);
iv) Durchführen einer Hilbert-Transformation an dem Realteil ($x_{1,Re}(t)$), um ein transformiertes Signal ($x''_{1,Re}$) bereitzustellen;
v) Subtrahieren des transformierten Signals ($x''_{1,Re}$) von dem Imaginärteil ($x_{1,Im}(t)$), um eine Phasenrauschsignalschätzung ($\hat{\phi}(t)$) zu erhalten; und
vi) Subtrahieren der Phasenrauschsignalschätzung ($\hat{\phi}(t)$) von dem Basisbandsignal ($x(t)$), um ein phasenrauschkorrigiertes Signal ($x_2(t)$) bereitzustellen.

2. Verfahren nach Anspruch 1, umfassend:

vii) Umwandeln des derotierten Basisbandsignals ($x_1(t)$) in ein Frequenzbereichssignal ($X_1(k)$);
viii) Subtrahieren von Beträgen negativer Frequenzen des Frequenzbereichssignals ($X_1(k)$) von positiven Frequenzen des Frequenzbereichssignals ($X_1(k)$), um ein Intermodulationssignal bereitzustellen; und
ix) Bestimmen von Vorzeichen ($\widehat{s_i}(k)$) des Intermodulationssignals,

wobei Schritt iv) Durchführen einer Fourier-Transformation einer Ausgabe der Hilbert-Transformation, Kombinieren einer Ausgabe der Fourier-Transformation mit den Vorzeichen ($\widehat{s_i}(k)$) und Durchführen einer inversen Fourier-Transformation an der kombinierten Ausgabe umfasst, um das transformierte Signal ($x''_{1,Re}$) bereitzustellen.

3. Verfahren nach Anspruch 1, umfassend:

vii) Umwandeln des derotierten Basisbandsignals ($x_1(t)$) in ein Frequenzbereichssignal ($X_1(k)$);
viii) Subtrahieren von Beträgen negativer Frequenzen des Frequenzbereichssignals ($X_1(k)$) von positiven Frequenzen des Frequenzbereichssignals ($X_1(k)$), um ein Intermodulationssignal bereitzustellen; und
ix) Bestimmen von Vorzeichen ($\widehat{s_i}(k)$) des Intermodulationssignals,

wobei Schritt iv) Durchführen einer Fourier-Transformation des derotierten Basisbandsignals ($x_1(t)$), Durchführen der Hilbert-Transformation in dem Frequenzbereich, Kombinieren einer Ausgabe der Hilbert-Transformation mit den Vorzeichen ($\widehat{s_i}(k)$) und Durchführen einer inversen Fourier-Transformation an der kombinierten Ausgabe umfasst, um das transformierte Signal ($x''_{1,Re}$) bereitzustellen.

4. Verfahren nach Anspruch 3, wobei die Hilbert-Transformation durch Multiplizieren des Fourier-transformierten Basisbandsignals mit -j für Frequenzen größer als Null durchgeführt wird.

5. Verfahren nach einem der vorhergehenden Ansprüche, wobei Schritt v) das Entfernen eines vorbestimmten Phasenrauschspektrums ($\phi_{xx}(f)$) aus der Phasenrauschsignalschätzung ($\hat{\phi}(t)$) umfasst.

6. Verfahren nach Anspruch 5, wobei die Schritte iii) bis v) wiederholt werden, um eine genauere Phasenrauschsignalschätzung ($\hat{\phi}(t)$) zu erhalten.

7. Verfahren nach einem der vorhergehenden Ansprüche, wobei Schritt ii) das Identifizieren einer spektralen Spitze in dem Basisbandsignal ($x(t)$) und das Demodulieren des Basisbandsignals ($x(t)$) um die spektrale Spitze umfasst.

8. Verfahren nach Anspruch 7, wobei das Demodulieren des Basisbandsignals ($x(t)$) Frequenzverschieben und Normieren des Basisbandsignals ($x(t)$) umfasst, um die identifizierte spektrale Spitze zu DC und mit einer Phase des Basisbandsignals ($x(t)$) bei +1 auf der IQ-Ebene zu verschieben.

9. Phasenrauschkorrekturmodul ($108_1$) für ein FMCW-Radar-Sendeempfängersystem (100), wobei das Phasenrauschkorrekturmodul ($108_1$) ausgelegt ist zum:

i) Empfangen eines Eingangsbasisbandsignals ($x(t)$);
ii) Derotieren des Basisbandsignals $x(t)$, um ein derotiertes Basisbandsignal ($x_1(t)$) bereitzustellen;
iii) Aufteilen des derotierten Basisbandsignals ($x_1(t)$) in einen Realteil ($x_{1,Re}(t)$) und einen Imaginärteil ($x_{1,m}(t)$);

iv) Durchführen einer Hilbert-Transformation an dem Realteil ($x_{1,Re}(t)$), um ein transformiertes Signal ($x''_{1,Re}$) bereitzustellen;

v) Subtrahieren des transformierten Signals von dem Imaginärteil, um eine Phasenrauschsignalschätzung ($\hat{\phi}(n)$) zu erhalten; und

vi) Subtrahieren des Phasenrauschsignals ($\hat{\phi}(n)$) von dem Eingangsbasisbandsignal ($x(t)$), um ein phasenrauschkorrigiertes Ausgangssignal ($x_2(t)$) bereitzustellen.

10. Phasenrauschkorrekturmodul ($108_1$) nach Anspruch 9, das ferner ausgelegt ist zum:

vii) Umwandeln des derotierten Basisbandsignals ($x_1(t)$) in ein Frequenzbereichssignal ($X_1(k)$);

viii) Subtrahieren von Beträgen negativer Frequenzen des Frequenzbereichssignals ($X_1(k)$) von positiven Frequenzen des Frequenzbereichssignals ($X_1(k)$), um ein Intermodulationssignal bereitzustellen; und

ix) Bestimmen von Vorzeichen ($\widehat{s_l}(k)$) des Intermodulationssignals,

wobei das Phasenrauschkorrekturmodul dazu ausgelegt ist, das transformierte Signal ($x''_{1,Re}$) durch Durchführen einer Fourier-Transformation einer Ausgabe der Hilbert-Transformation, Kombinieren einer Ausgabe der Fourier-Transformation mit den Vorzeichen ($\widehat{s_l}(k)$) und Durchführen einer inversen Fourier-Transformation an der kombinierten Ausgabe bereitzustellen.

11. Phasenrauschkorrekturmodul ($108_1$) nach Anspruch 9, das ferner ausgelegt ist zum:

vii) Umwandeln des derotierten Basisbandsignals ($x_1(t)$) in ein Frequenzbereichssignal ($X_1(k)$);

viii) Subtrahieren von Beträgen negativer Frequenzen des Frequenzbereichssignals ($X_1(k)$) von positiven Frequenzen des Frequenzbereichssignals ($X_1(k)$), um ein Intermodulationssignal bereitzustellen; und

ix) Bestimmen von Vorzeichen ($\widehat{s_l}(k)$) des Intermodulationssignals,

wobei das transformierte Signal ($x''_{1,Re}$) bereitgestellt wird durch Durchführen einer Fourier-Transformation des derotierten Basisbandsignals ($x_1(t)$), Durchführen der Hilbert-Transformation in dem Frequenzbereich, Kombinieren einer Ausgabe der Hilbert-Transformation mit den Vorzeichen ($\widehat{s_l}(k)$) und Durchführen einer inversen Fourier-Transformation an der kombinierten Ausgabe.

12. Phasenrauschkorrekturmodul ($108_1$) nach Anspruch 11, wobei die Hilbert-Transformation durch Multiplizieren des Fourier-transformierten Basisbandsignals mit -j für Frequenzen größer als Null durchgeführt wird.

13. FMCW-Radar-Sendeempfänger ($101_1$), umfassend:

einen Signalgenerator ($103_1$), der dazu ausgelegt ist, ein Sendesignal zu erzeugen;

einen Sendeverstärker ($104_1$), der dazu ausgelegt ist, das Sendesignal zu verstärken;

eine Sendeantenne ($102_{1TX}$), die dazu ausgelegt ist, das verstärkte Sendesignal von dem Sendeverstärker ($104_1$) zu empfangen;

eine Empfangsantenne ($102_{1RX}$);

einen Empfängerverstärker ($105_1$), der dazu ausgelegt ist, ein Signal von der Empfangsantenne ($102_{1RX}$) zu empfangen;

einen Mischer ($106_1$), der dazu ausgelegt ist, ein verstärktes Signal von dem Verstärker ($105_1$) mit dem Sendesignal von dem Signalgenerator ($103_1$) zu mischen, um ein analoges Basisbandsignal bereitzustellen;

einen Analog-Digital-Wandler, ADC ($107_1$), der dazu ausgelegt ist, das analoge Basisbandsignal von dem Mischer ($106_1$) zu empfangen; und

ein Phasenrauschkorrekturmodul ($108_1$) nach einem der Ansprüche 9 bis 12, das dazu ausgelegt ist, das digitale Basisbandsignal von dem ADC ($107_1$) zu empfangen und das phasenrauschkorrigierte Ausgangssignal ($x_2(t)$) bereitzustellen.

14. FMCW-Radar-Sendeempfänger ($101_1$) nach Anspruch 13, ferner umfassend ein Entfernungs-Doppler-Modul ($109_1$), das dazu ausgelegt ist, das phasenrauschkorrigierte Ausgangssignal ($x_2(t)$) zu empfangen und Distanz- und Geschwindigkeitsinformationen eines oder mehrerer Ziele (110) in dem Signal von der Empfangsantenne ($102_{1RX}$) auszugeben.

15. FMCW-Radar-Sendeempfängersystem (100), das eine Vielzahl von FMCW-Radar-Sendeempfängern ($101_1$, $101_2$)

nach Anspruch 14 umfasst, ferner umfassend eine Datenverarbeitungseinheit (111), die dazu ausgelegt ist, ausgegebene Distanz- und Geschwindigkeitsinformationen von jedem Entfernungs-Doppler-Modul ($109_1$, $109_2$) zu empfangen.

**Revendications**

1. Procédé de suppression du bruit de phase d'un signal en bande de base (x(t)) dans un émetteur-récepteur radar FMCW ($101_1$), le procédé comprenant :

    i) la réception du signal en bande de base (x(t)) ;
    ii) la dérotation du signal en bande de base (x(t)) pour fournir un signal en bande de base ayant subi une dérotation ($x_1(t)$) ;
    iii) la séparation du signal en bande de base ayant subi une dérotation ($x_1(t)$) en une partie réelle ($x_{1,Re}(t)$) et une partie imaginaire ($x_{1,Im}(t)$) ;
    iv) la réalisation d'une transformée de Hilbert sur la partie réelle ($x_{1,Re}(t)$) pour fournir un signal transformé ($x''_{1,Re}$) ;
    v) la soustraction du signal transformé ($x''_{1,Re}$) de la partie imaginaire ($x_{1,Im}(t)$) pour obtenir une estimation de signal de bruit de phase ($\hat{\phi}(t)$) ; et
    vi) la soustraction de l'estimation de signal de bruit de phase ($\hat{\phi}(t)$) du signal en bande de base (x(t)) pour fournir un signal corrigé du bruit de phase ($x_2(t)$).

2. Procédé selon la revendication 1, comprenant :

    vii) la conversion du signal en bande de base ayant subi une dérotation ($x_1(t)$) en un signal dans le domaine fréquentiel ($X_1(k)$) ;
    viii) la soustraction de modules de fréquences négatives du signal dans le domaine fréquentiel ($X_1(k)$) de fréquences positives du signal dans le domaine fréquentiel ($X_1(k)$) pour fournir un signal d'intermodulation ; et
    ix) la détermination de signes ( $\widehat{s_i}(k)$ ) du signal d'intermodulation,
    dans lequel l'étape iv) comprend la réalisation d'une transformée de Fourier d'une sortie de la transformée de Hilbert, la combinaison d'une sortie de la transformée de Fourier avec les signes ( $\widehat{s_i}(k)$ ) et la réalisation d'une transformée de Fourier inverse sur la sortie combinée pour fournir le signal transformé ($x''_{1,Re}$).

3. Procédé selon la revendication 1, comprenant :

    vii) la conversion du signal en bande de base ayant subi une dérotation ($x_1(t)$) en un signal dans le domaine fréquentiel ($X_1(k)$) ;
    viii) la soustraction de modules de fréquences négatives du signal dans le domaine fréquentiel ($X_1(k)$) de fréquences positives du signal dans le domaine fréquentiel ($X_1(k)$) pour fournir un signal d'intermodulation ; et
    ix) la détermination de signes ( $\widehat{s_i}(k)$ ) du signal d'intermodulation,
    dans lequel l'étape iv) comprend la réalisation d'une transformée de Fourier du signal en base de base ayant subi une dérotation ($x_1(t)$), la réalisation de la transformée de Hilbert dans le domaine fréquentiel, la combinaison d'une sortie de la transformée de Hilbert avec les signes ( $\widehat{s_i}(k)$ ) et la réalisation d'une transformée de Fourier inverse sur la sortie combinée pour fournir le signal transformé ($x''_{1,Re}$).

4. Procédé selon la revendication 3, dans lequel la transformée de Hilbert est réalisée par multiplication du signal en bande de base transformé par transformée de Fourier par -j pour des fréquences supérieures à zéro.

5. Procédé selon l'une quelconque des revendications précédentes, dans lequel l'étape v) comprend la suppression d'un spectre de bruit de phase prédéterminé ($\phi_{xx}(f)$) de l'estimation de signal de bruit de phase ($\hat{\phi}(t)$).

6. Procédé selon la revendication 5, dans lequel les étapes iii) à v) sont répétées pour obtenir une estimation de signal de bruit de phase ($\hat{\phi}(t)$) plus précise.

7. Procédé selon l'une quelconque des revendications précédentes, dans lequel l'étape ii) comprend l'identification d'un pic spectral dans le signal en bande de base (x(t)) et la démodulation du signal en bande de base (x(t)) autour du pic spectral.

8. Procédé selon la revendication 7, dans lequel la démodulation du signal en bande de base $(x(t))$ comprend le décalage fréquentiel et la normalisation du signal en bande de base $(x(t))$ pour déplacer le pic spectral identifié vers la composante continue et avec une phase du signal en bande de base $(x(t))$ à +1 sur le plan IQ.

9. Module de correction du bruit de phase $(108_1)$ pour un système d'émetteurs-récepteurs radar FMCW (100), le module de correction du bruit de phase $(108_1)$ étant configuré pour :

   i) recevoir un signal en bande de base d'entrée $(x(t))$ ;
   ii) effectuer une dérotation du signal en bande de base $(x(t))$ pour fournir un signal en bande de base ayant subi une dérotation $(x_1(t))$ ;
   iii) séparer le signal en bande de base ayant subi une dérotation $(x_1(t))$ en une partie réelle $(x_{1,Re}(t))$ et une partie imaginaire $(x_{1,Im}(t))$ ;
   iv) réaliser une transformée de Hilbert sur la partie réelle $(x_{1,Re}(t))$ pour fournir un signal transformé $(x''_{1,Re})$ ;
   v) soustraire le signal transformé de la partie imaginaire pour obtenir un signal de bruit de phase $(\hat{\phi}(n))$ ; et
   vi) soustraire le signal de bruit de phase $(\hat{\phi}(n))$ du signal en bande de base d'entrée $(x(t))$ pour fournir un signal de sortie corrigé du bruit de phase $(x_2(t))$.

10. Module de correction du bruit de phase $(108_1)$ selon la revendication 9, configuré en outre pour :

    vii) convertir le signal en bande de base ayant subi une dérotation $(x_1(t))$ en un signal dans le domaine fréquentiel $(X_1(k))$ ;
    viii) soustraire des modules de fréquences négatives du signal dans le domaine fréquentiel $(X_1(k))$ de fréquences positives du signal dans le domaine fréquentiel $(X_1(k))$ pour fournir un signal d'intermodulation ; et

    ix) déterminer des signes ( $\widehat{S_i}(k)$ ) du signal d'intermodulation,

    dans lequel le module de correction du bruit de phase est configuré pour fournir le signal transformé $(x''_{1,Re})$ en réalisant une transformée de Fourier d'une sortie de la transformée de Hilbert, en combinant une sortie de la transformée de Fourier avec les signes ( $\widehat{S_i}(k)$ ) et en réalisant une transformée de Fourier inverse sur la sortie combinée.

11. Module de correction du bruit de phase $(108_1)$ selon la revendication 9, configuré en outre pour :

    vii) convertir le signal en bande de base ayant subi une dérotation $(x_1(t))$ en un signal dans le domaine fréquentiel $(X_1(k))$ ;
    viii) soustraire des modules de fréquences négatives du signal dans le domaine fréquentiel $(X_1(k))$ de fréquences positives du signal dans le domaine fréquentiel $(X_1(k))$ pour fournir un signal d'intermodulation ; et

    ix) déterminer des signes ( $\widehat{S_i}(k)$ ) du signal d'intermodulation,

    dans lequel le signal transformé $(x''_{1,Re})$ est fourni en réalisant une transformée de Fourier du signal en base de base ayant subi une dérotation $(x_1(t))$, en réalisant la transformée de Hilbert dans le domaine fréquentiel, en combinant une sortie de la transformée de Hilbert avec les signes ( $\widehat{S_i}(k)$ ) et en réalisant une transformée de Fourier inverse sur la sortie combinée.

12. Module de correction du bruit de phase $(108_1)$ selon la revendication 11, dans lequel la transformée de Hilbert est réalisée en multipliant le signal en bande de base transformé par transformée de Fourier par -j pour des fréquences supérieures à zéro.

13. Émetteur-récepteur radar FMCW $(101_1)$ comprenant :

    un générateur de signal $(103_1)$ configuré pour générer un signal d'émission ;
    un amplificateur d'émission $(104_1)$ configuré pour amplifier le signal d'émission ;
    une antenne d'émission $(102_{1TX})$ configurée pour recevoir le signal d'émission amplifié provenant de l'amplificateur d'émission $(104_1)$ ;
    une antenne de réception $(102_{1RX})$ ;

un amplificateur de réception ($105_1$) configuré pour recevoir un signal provenant de l'antenne de réception ($102_{1RX}$) ;

un mélangeur ($106_1$) configuré pour mélanger un signal amplifié provenant de l'amplificateur ($105_1$) avec le signal d'émission provenant du générateur de signal ($103_1$) pour fournir un signal analogique en bande de base ;

un convertisseur analogique-numérique, ADC, ($107_1$) configuré pour recevoir le signal analogique en bande de base provenant du mélangeur ($106_1$) ; et

un module de correction du bruit de phase ($108_1$) selon l'une quelconque des revendications 9 à 12, configuré pour recevoir le signal numérique en bande de base provenant de l'ADC ($107_1$) et fournir le signal de sortie corrigé du bruit de phase ($x_2(t)$).

14. Émetteur-récepteur radar FMCW ($101_1$) selon la revendication 13, comprenant en outre un module distance-Doppler ($109_1$) configuré pour recevoir le signal de sortie corrigé du bruit de phase ($x_2(t)$) et fournir en sortie des informations de distance et de vitesse d'une ou de plusieurs cibles (110) dans le signal provenant de l'antenne de réception ($102_{1RX}$).

15. Système d'émetteurs-récepteurs radar FMCW (100) comprenant une pluralité d'émetteurs-récepteurs radar FMCW ($101_1$, $101_2$) selon la revendication 14, comprenant en outre une unité de traitement de données (111) configurée pour recevoir des informations de distance et de vitesse de sortie provenant de chaque module distance-Doppler ($109_1$, $109_2$).

Fig. 1

Fig. 2

Fig. 3

EP 4 567 455 B1

Fig. 4

Fig. 5

Fig. 6

Fig. 7

Fig. 8

Fig. 9

EP 4 567 455 B1

Fig. 10

Fig. 11

## REFERENCES CITED IN THE DESCRIPTION

**Patent documents cited in the description**

- US 11709221 B2

**Non-patent literature cited in the description**

- **YANG SHANG et al.** Design and Analysis of CMOS-Based Terahertz Integrated Circuits by Causal Fractional-Order RLGC Transmission Line Model. *IEEE JOURNAL ON EMERGING AND SELECTED TOPICS IN CIRCUITS AND SYSTEMS*, September 2013, vol. 3 (3), 355-366